# EUROPEAN PATENT APPLICATION

(11) **EP 2 777 451 A1**
(43) Date of publication of application: **17.09.2014**
(21) Application number: 12823235.2
(22) Date of filing: 10.07.2012
(51) Int. Cl.: A47J 27/10, A47J 27/18, A47J 36/00

(54) **VACUUM LOW TEMPERATURE COOKER**

(30) Priority: 09.11.2011 CN 201110353691
(71) Applicant: Bigland Electric Appliance Co., Ltd., Dongguan, Guangdong 523200 (CN)
(72) Inventor: HU, Zhine, Wangniudun Town, Dongguan Guangdong 523200 (CN)
(74) Representative: Chaillot, Geneviève
(86) International application number: PCT/CN2012/078405
(87) International publication number: WO 2013/067825

(57) **Abstract**

The present invention discloses a low-temperature vacuum cooking machine, which comprises a housing; the housing is provided with a container and a heating circulation system inside; the container comprises a bowl and a machine cover; the heating circulation system comprises a heater, a water pump and a connection pipe; the heater and the water pump are connected with the bowl in series by the connection pipe to form a closed circulation loop; and the bowl is provided with a water inlet and a water outlet which are connected with the connection pipe. The temperature of water in the whole container of the low-temperature vacuum cooking machine is consistent. The heating circulation loop which heats circulating water enables water quickly flowing through the heater to absorb more than 95% of the thermal energy of the heater, thus saving energy. The heater is arranged out of the container, and in this way, the bowl of the cooking machine has the maximal cooking space and can be conveniently cleaned by a user.

## Description

### Technical Field

The present invention belongs to a low-temperature vacuum cooking machine.

### Background Art

Low-temperature vacuum cooking is a cooking method for long-time heating in water at a relatively low constant temperature. Foods cooked by this method need to cook for a long time, some over 24 h. Unlike cooking by using a slow cooker, low-temperature vacuum cooking requires sealing foods in a plastic bag and then immersing the plastic bag in hot water at a temperature far lower than the boiling point of the water (such as 60°C or 140°F) for a long time and usually needs to accurately control the temperature of the hot water because 1°C deviation can affect the quality of the food.

The traditional low-temperature vacuum cooking machine is classified into two types: the heater works close to the bottom of the container; the heater works in the container; and the heater is controlled by using the temperature sensor outside the container through electronic control to fulfill the aim of keeping constant temperature.

These two kinds of low-temperature vacuum cooking machines have the following defects: the method where the heater works close to the bottom of the container and the method where the heater works in the container both cause higher temperature to the part close to the heater and non-uniform water temperature and therefore affect the food quality; both temperature sensors do not directly contact the water and cause deviation between the displayed temperature and the real temperature and therefore further affect the food quality.

### Disclosure of the Invention

The overcome the defects in the prior art, the present invention provides a low-temperature vacuum cooking machine, which ensures that the water temperature in the container is kept consistent, so that the temperature of any part of the food immersed in the container is kept constant to guarantee the best quality of the food.

To solve the mentioned technical problem, the present invention is realized by the following technical solution:
A low-temperature vacuum cooking machine comprises a housing, wherein said housing is provided with a container and a heating circulation system inside; said container comprises a bowl and a machine cover; characterized in that: said heating circulation system comprises a heater, a water pump, and a connection pipe; said heater and said water pump are connected in series with said bowl by said connection pipe to form a closed circulation loop; said bowl is provided with a water inlet and a water outlet which are connected with said connection pipe; and said heater is fixed on said housing through a fixed support.

Furthermore, the water inlet at the bottom of said bowl is provided with a hollow screw and a tee joint; said tee joint is connected with the bowl in one direction, connected with said water pump through said connection pipe in another direction, and connected with a drain hole through a drain pipe in another direction, and also comprises a handle for controlling the opening and closing of the drain pipe.

Furthermore, said tee joint is provided with a temperature senor in direct contact with water.

Furthermore, said hollow screw is provided with a detachable outer filter screen; and a non-detachable inner filter screen is arranged between said hollow screw and said tee joint.

Furthermore, said outer filter screen comprises an external support of the outer filter screen, an outer filter screen, and an internal support of the outer filter screen.

Furthermore, the water outlet of said connection pipe is fixed on the lateral wall of said bowl through a bend and a hollow screw.

Furthermore, the head of said hollow screw has four outlet holes in different directions, one on the left, one on the right and two at the front.

Furthermore, said machine cover comprises an outer cover and an inner cover; and said inner cover is provided with a front buckle and a rear buckle which are clamped with said outer cover.

Furthermore, said housing is provided with a bottom cover on the lower side; said bottom cover is provided with a slot; said slot receives a base; the slot surface has several fine projections for supporting the base, every two projections form an angle of 20 degrees for supporting the base; and said housing can rotate with respect to said base.

Furthermore, the water outlet of said heater is provided with a protective temperature sensor.

Compared with the prior art, the present invention has the following advantages:
The present invention ensures that the temperature of water throughout the whole container of the low-temperature vacuum cooking machine is consistent; the heating circulation loop which heats circulating water enables water quickly flowing through the heater to absorb more than 95% of the thermal energy of the heater, thus saving energy; the heater is arranged out of the container and fixed on the housing through a fixed support, and in this way, the bowl of the cooking machine has the maximal cooking space and can be conveniently cleaned by a user.

The drain pipe is used for draining water in the container after cooking, and such arrangement ensure that the user can more easily and safely drain water in the container.

The temperature sensor is placed at the connection pipe at the inlet end of the water pump and directly contacts with the water. In this way, the temperature sensor can more quickly and accurately reflect the true water temperature in real time to fulfill the aim of precise control over the constant temperature.

The connection pipe between the container and the water pump is equipped with a two-layer filter unit, wherein one layer is tightly fixed in the connection pipe and one layer is a detachable filter screen. In this way, impurities are prevented from entering the circulating pipe to cause blockage and clamping, and convenience is brought to the user during dismantling and cleaning.

The head of the hollow screw has four outlet holes in different directions, and the four outlet holes spout water in different directions to stir water in the bowl. In this way, the temperature of the water in the bowl is more uniform after stirring.

The machine cover is a two-layer structure consisting of an outer cover and an inner cover. This structure ensures that the temperature of the outer surface of the machine cover is relatively low to prevent scalding the user, and enable the machine cover to preserve heater so as to save energy.

The housing can rotate 360 degrees with respect to the base, so the user can easily adjust the direction of the machine and use the machine conveniently.

### Brief Description of Drawings

The attached drawings are provided for further describing and explaining the present invention together with the embodiments of the present invention, and shall not limit the present invention. Among the attached drawings:
Figure 1 is a complete exploded view of a low-temperature vacuum cooking machine.
Figure 2 is a top view of a low-temperature vacuum cooking machine.
Figure 3 is a sectional view intercepted along the line A-A in figure 2.
Figure 4 is a sectional view intercepted along the line B-B in figure 2.
Figure 5 is a sectional view intercepted along the line C-C in figure 2.
Figure 6 is an outflow directional view of a water outlet.
Figures 7A-7D are a collection of detailed views of a machine cover.
Figure 8 is a schematic view of rotation of the machine cover with respect to a base.

### Best Mode for Carrying out the Invention

The preferable embodiment of the present invention is described with reference to the attached drawings. It should be understood that the preferable embodiment provided here is only used for describing and explaining the present invention and shall not limit the present invention.

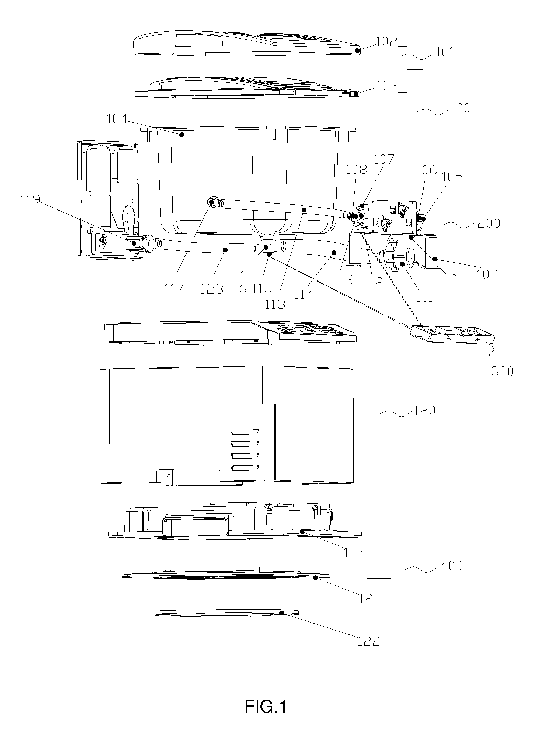

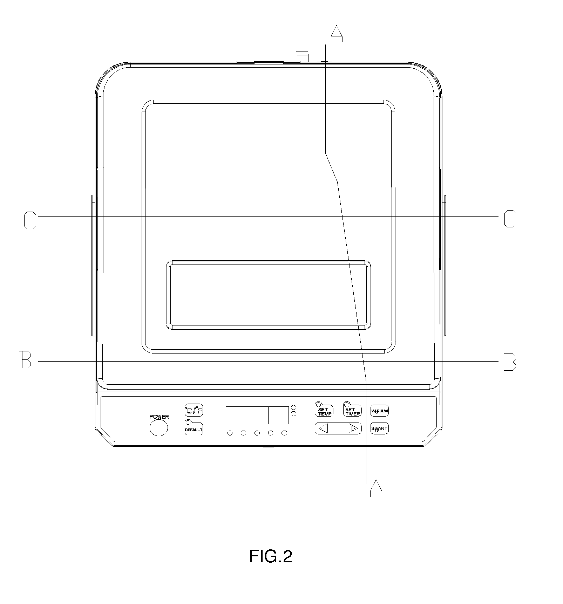

As shown in figures 1 and 2, the low-temperature vacuum cooking machine of the present invention comprises a container 100, a heating circulation system 200, and a housing 400 for installing the container 100 and the heating circulation system 200. The container 100 consists of a bowl 104 for containing water during cooking and a machine cover 101 for covering the bowl 104. The heating circulation system 200 consists of a water pump 111, a heater 107 and a set of electronic control system 300. The work of the heater 107 is controlled by the electronic control system to accurately keep the temperature of water in the container 100 constant.

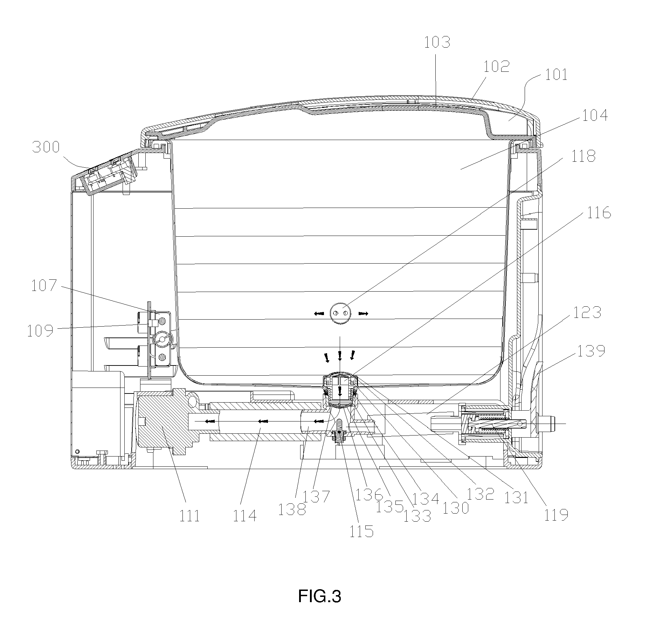

The heater 107 does not directly contact the container 100. Figures 3-5 show the flow direction of water in the bowl 104 during the working of the vacuum low-temperature cooking machine 10; the water in the bowl 104 enters the water pump 111 from a water inlet 116 through the connection pipe 114; the water pump 111 applies a force, so the water flows through a connection pipe 110, an elbow 105 and a connection 106 to enter the heater 107; and after being heated, the water flows through a connection pipe 112, an elbow 113, a connection pipe 118 and a water outlet 117 to return back to the bowl 104, thus forming a closed circulation loop. In this embodiment, the water inlet 116 is fixed at one end of the bottom of the bowl 104 by a hollow screw 134 and a tee joint 138. The tee joint 138 is connected with the bowl 104 in one direction, connected with the water pump 111 through a connection pipe 114 in one direction, and connected with a drain hole 119 through a drain pipe 123 in another direction. A temperature sensor 115 is fixed on the tee joint 138, directly contacting with the water in the channel to sense the temperature. The water pump 111 is fixed on a lower box 124. The water pump 111 is connected to one end of the heater 107 through the connection pipe 110, the elbow 105 and the connection pipe 106. The heater 107 is fixed on the housing 400 by using a fixed support 109. The other end of the heater is connected to the bowl 104 through the connection pipe 112, the elbow 113, the connection pipe 118 and the water outlet 117. The protective temperature sensor 108 is fixed on the elbow 113. The water outlet 117 is fixed on the lateral wall of the bowl through a hollow screw 151 and an elbow 150, and the fixing position is in the range of 30-200mm height of the base, about 65mm in this embodiment.

The protective temperature sensor 108 is located in the loop. The rear end of the heater 107 is connected into the connection pipe 118. When the protective temperature sensor 108 detects that the temperature of the water flowing through the heater 107 is too high, the electronic control system enables heater 107 to stop working, and when the temperature is normal, the electronic control system recovers the work of the heater 107. If the temperature is too high for two consecutive times, all power supplies will be cut off. In this way, the machine is prevented from damage caused by ultra-high temperature generated by blockage or semi-blockage of the connection pipe 118.

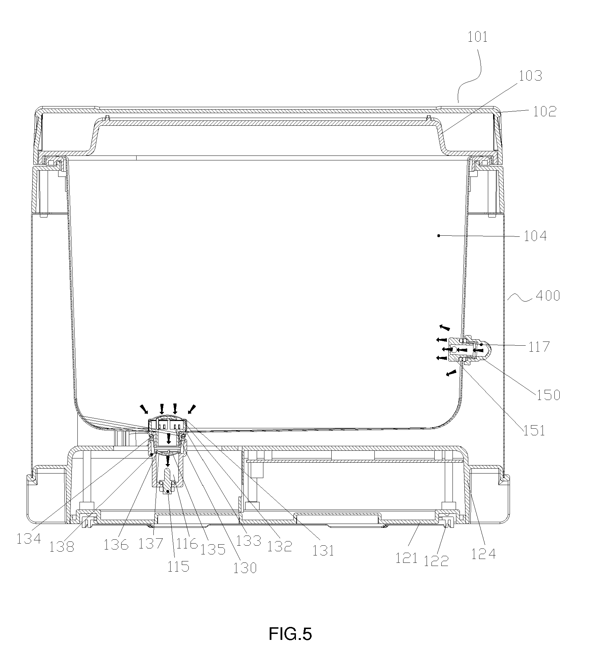

Figure 5 is a sectional view of installation of the water inlet 116 and the water outlet 117 as well as the bowl 104. The water inlet 116 consists of an outer filter screen assembly 130, a hollow screw 134, an inner filter screen assembly 135, and a tee joint 138. The water outlet 117 consists of the elbow 150 and the hollow 151. In this embodiment, the water inlet 116 is fixed on the bowl 104 through the hollow screw 134 and the tee joint 138. The outer filter screen assembly 130 is arranged on the hollow screw 134 and can be detached and cleaned. The outer filter screen assembly 130 can be disassembled into an external support of the outer filter screen 131, an outer filter screen 132 and an internal support of the outer filter screen 133 which can be re-assembled after cleaning. The inner filter screen assembly 135 fixed between the hollow screw 134 and the tee joint 138 is a non-detachable filter screen. The arrangement of the two layers of filter screens makes filtration more complete, while the structure that one is detachable and the other is non-detachable brings convenience for the user to clean the filter screens, and blockage of the pipe by the impurities caused by carelessness during the installation of the filter screen is avoided.

The temperature sensor 115 is fixed on the tee joint 138, and the temperature sensing part faces the bottom of the bowl 104. The way of installing the temperature sensor 115 into the water inlet 116 not only enables the temperature sensor 115 to directly contact with the water to sense the temperature, but also ensures that the temperature at the temperature sensing point is consistent with the water temperature in the bowl 104, so the temperature control is more accurate.

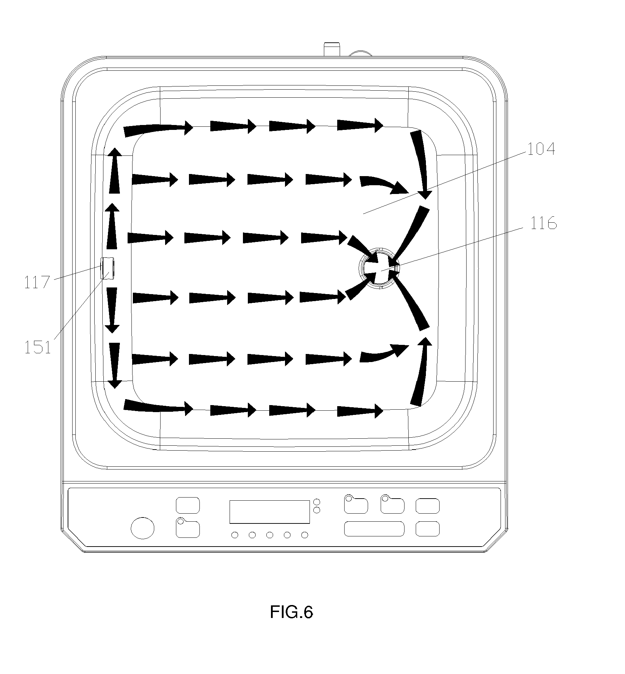

The water outlet 117 is fixed on the lateral wall of the bowl 104 through the elbow 150 and the hollow screw 151. As shown in figure 6, the head of the hollow screw 151 has four outlet holes in different directions, one on the left, one on the right, and two at the front. The water pressurized by the water pump 111 is heated by the heater 107 and then form water columns in different directions through the four holes of the hollow screw 151 to stir the water in the bowl. In this way, the temperature of water in the bowl 104 is more uniform after stirring, and the water temperatures at all positions in the bowl 104 are kept consistent, so the temperatures at all positions of the food immersed in the bowl 104 are kept consistent to guarantee the best quality of the food.

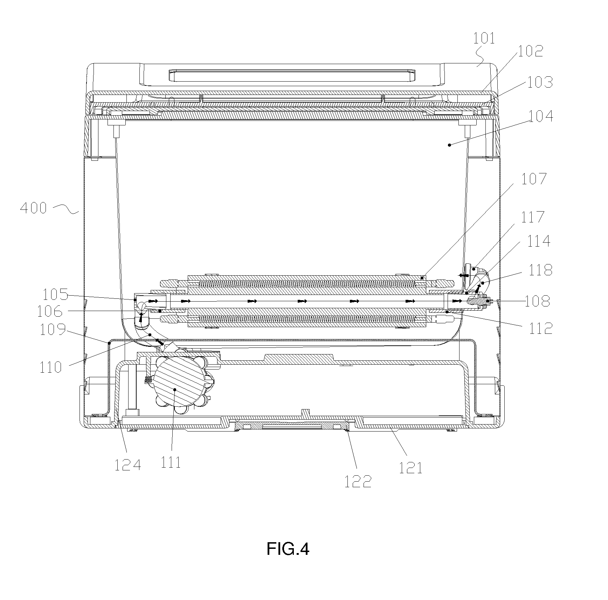

Figure 4 is a sectional view of the fixation means and connection at two ends of the heater 107. In this embodiment, the heater 107 is fixed on the fixed support 109; the two ends of the fixed support 109 are fixed on the housing 400; the heart 107 does not directly contact with the bowl 104; one end of the heater 107 is connected through the water pump 111 through the connection pipe 106, the elbow 105 and the connection pipe 110, while the other end is connected with the bowl 104 through the connection pipe 112, the elbow 113, the connection 118 and the water outlet 117. In this embodiment, the protective temperature sensor 108 is fixed on the elbow 113, and the temperature sensing part faces the port of the heating pipe. In this way, the temperature detected by the protective temperature sensor 108 is the temperature of the water heated by the heater 907 in the circulation loop, and the temperature at this point basically is the highest temperature in the whole heating circulation system 200.

Figure 3 is the sectional view of the drain mechanism 119. In this embodiment, when a handle 139 is lifted to rotate about 90 degrees and open the drain mechanism 119, the water in the bowl 104 is drained by the drain mechanism 119 from the water inlet 116 via the connection pipe 123.

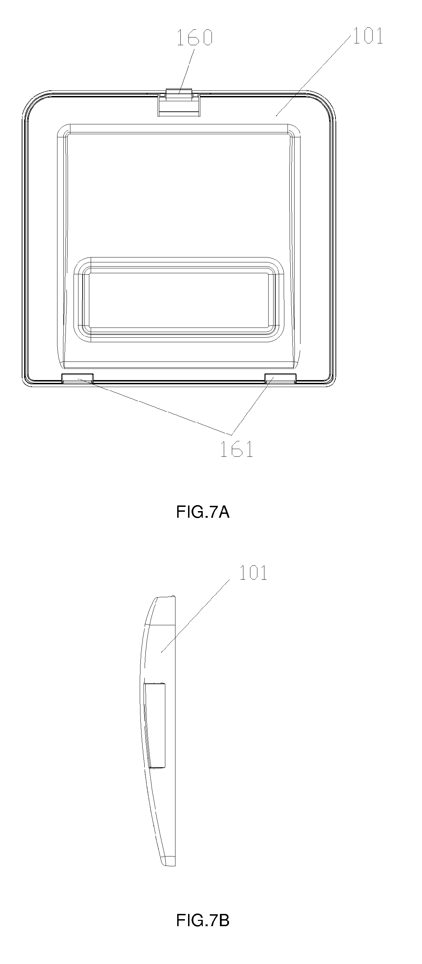

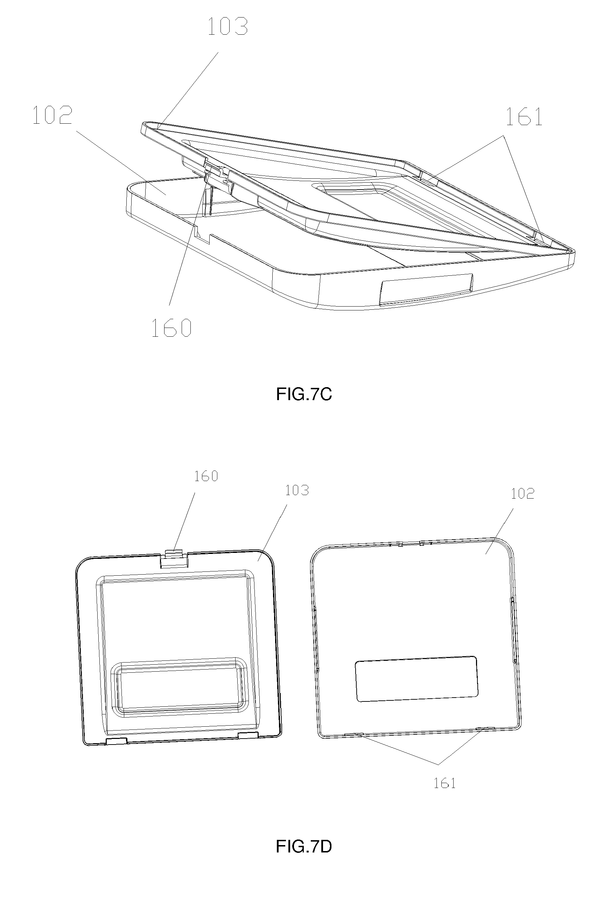

The machine cover 101 consists of an outer cover 102 and an inner cover 103. As shown in figures 7A-7D, the outer cover 102 and the inner cover 103 can be disassembled. In this embodiment, the inner cover 103 can be lifted up by pushing the rear buckle 160 of the inner cover 103 inward; the inner cover 103 can be separated from the outer cover 102 by pulling the inner cover 103 in an inclined way; the inner cover 103 and the outer cover 102 can be assembled together by inserting the inner cover 103 into the front buckle 161 of the outer cover in an inclined way and then pressing the inner cover 103.

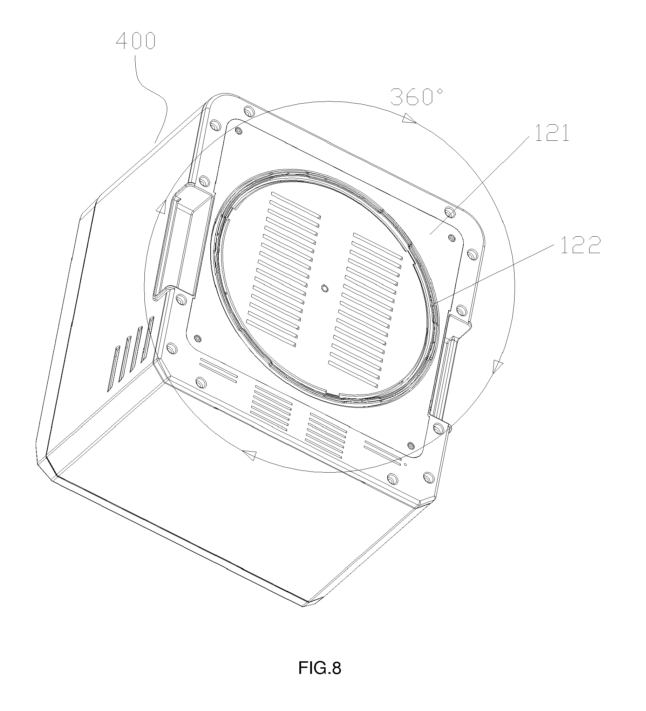

Figure 8 shows that the machine housing 400 can rotate 360 degrees with respect to the base 122. In this embodiment, the bottom cover 121 sinks to form a circle of slot; the base 122 is installed in the slot; the slot surface has a circle of fine projections; and every two projections form an angle of 20 degrees for supporting the base 122 and reducing friction force. During rotation, the base 122 is fixed on the table surface, and the housing 400 rotates with respect to eh base 122.

Finally, it should be noted that: the above embodiments are preferable embodiments of the present invention only, and shall not be regarded as limit of the present invention. Although the present invention is described in detail with reference to the embodiments, those skilled in this field still can modify the technical schemes of the mentioned embodiments, or perform equivalent substitution on part of the technical features. Within the spirit and principle of the present invention, any modification, equivalent substitution and improvement shall be included in the protective scope of the present invention.

## Claims

1. A low-temperature vacuum cooking machine, comprising a housing, wherein said housing is provided with a container and a heating circulation system inside; said container comprises a bowl and a machine cover; **characterized in that**: said heating circulation system comprises a heater, a water pump and a connection pipe; said heater and said water pump are connected in series with said bowl by said connection pipe to form a closed circulation loop; and said bowl is provided with a water inlet and a water outlet which are connected with said connection pipe.

2. The low-temperature vacuum cooking machine according to claim 1, **characterized in that**: the water inlet at the bottom of said bowl is provided with a hollow screw and a tee joint; said tee joint is connected with the bowl in one direction, connected with said water pump through said connection pipe in another direction, and connected with a drain hole through a drain pipe in another direction, and also comprises a handle for controlling the opening and closing of the drain pipe.

3. The low-temperature vacuum cooking machine according to claim 2, **characterized in that**: said tee joint is provided with a temperature sensor which directly contacts water.

4. The low-temperature vacuum cooking machine according to claim 2, **characterized in that**: said hollow screw is provided with a detachable outer filter screen inside; and a non-detachable inner filter screen is arranged between said hollow screw and said tee joint.

5. The low-temperature vacuum cooking machine according to claim 4, **characterized in that**: said outer filter screen comprises an external support of the outer filter screen, an outer filter screen and an internal support of the outer filter screen.

6. The low-temperature vacuum cooking machine according to claim 1, **characterized in that**: the water outlet of said connection pipe is fixed on the lateral wall of said bowl through a bed and a hollow screw.

7. The low-temperature vacuum cooking machine according to claim 6, **characterized in that**: the head of the hollow screw has four outlet holes in different directions, one on the left, one on the right and two at the front.

8. The low-temperature vacuum cooking machine according to claim 1, **characterized in that**: said machine cover comprises an outer cover and an inner cover; and said inner cover is provided with a front buckle and a rear buckle, which are clamped with said outer cover.

9. The low-temperature vacuum cooking machine according to claim 1, **characterized in that**: said housing is provided with a bottom cover on the lower side; said bottom cover is provided with a slot; said slot receives a base; the slot surface has several fine projections for supporting the base; and said housing can rotate with respect to said base.

10. The low-temperature vacuum cooking machine according to claim 1, **characterized in that**: the water outlet of said heater is provided with a protective temperature sensor.
